Europäisches Patentamt

European Patent Office

Office européen des brevets

(11) Veröffentlichungsnummer: **0 363 706**
**A2**

# EUROPÄISCHE PATENTANMELDUNG

(21) Anmeldenummer: **89117539.0**

(22) Anmeldetag: **22.09.89**

(51) Int. Cl.⁵: **C08F 2/38** , **C08F 4/06**

Patentansprüche für folgende Vertragsstaat: ES.

(30) Priorität: **05.10.88 DE 3833818**

(43) Veröffentlichungstag der Anmeldung:
**18.04.90 Patentblatt 90/16**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Bender, Dietmar, Dr.**
**Sebastian-Kneipp-Strasse 19**
**D-6707 Schifferstadt(DE)**
Erfinder: **Bronstert, Klaus, Dr.**
**Gartenstrasse 26**
**D-6719 Carlsberg(DE)**
Erfinder: **Becker, Rainer, Dr.**
**Im Haseneck 22**
**D-6702 Bad Duerkheim(DE)**

(54) Polymere mit endständigen Halogenatomen.

(57) Polymere mit endständigen Halogenatomen aus kationisch polymerisierbaren, olefinisch ungesättigten Monomeren, erhältlich durch Polymerisation mittels eines Initiatorsystems aus einer halogenhaltigen Lewissäure und einem 3- bis 8-gliedrigen cyclischen Ether.

EP 0 363 706 A2

## Polymere mit endständigen Halogenatomen

Die vorliegende Erfindung betrifft neue Polymere mit endständigen Halogenatomen aus kationisch polymerisierbaren, olefinisch ungesättigten Monomeren, erhältlich durch Polymerisation mittels eines Initiatorsystems aus einer halogenhaltigen Lewissäure und einem 3-bis 8-gliedrigen cyclischen Ether.

Die Synthese von Telechelen, d. h. Makromolekülen mit zwei reaktiven Endgruppen, wird von J.P. Kennedy in den Patentveröffentlichungen US-A 4 342 849, US-A 4 316 973 und EP-A 206 756 beschrieben. Dabei wird die Polymerisation von kationisch polymerisierbaren Monomeren durch eine binäre Mischung aus einem Arylalkyldihalogenid als Initiator und einer halogenhaltigen Lewissäure als Coinitiator ausgelöst. Die hierbei erhältlichen Makromoleküle weisen im Durchschnitt wegen intramolekularer Friedel-Crafts-Reaktionen aber weniger als zwei Halogenatome an den Kettenenden auf, so daß sie sich deswegen für die Herstellung von einheitlichen Blockcopolymeren nur bedingt eignen. Das gleiche gilt für polymeranaloge Umsetzungen, in denen man an beiden Kettenenden bestimmte andere Endgruppen einführen will.

Werden tertiäre aliphatische Halogenide als Initiatoren eingesetzt, so kann zwar keine Friedel-Crafts-Reaktion stattfinden, jedoch sind derartige Initiatoren oft präparativ nur schwierig zugänglich und werden meistens nur zu einem geringeren Prozentsatz in das Makromolekül eingebaut.

Bei der Initiierung der kationischen Isobutenpolymerisation durch Arylalkylether (Polymer Bulletin 17, 7 (1987)) werden die entstehenden Makromoleküle bei Reaktionstemperaturen oberhalb von -70°C infolge intramolekularer Friedel-Crafts-Reaktionen teilweise von Indangruppen terminiert, was ihre Verwendbarkeit als Telechele stark einschränkt. Ferner sind sie relativ uneinheitlich.

Der Erfindung lag die Aufgabe zugrunde, den geschilderten Nachteilen abzuhelfen und kationische Polymerisate von olefinisch ungesättigten Monomeren mit endständigen Halogenatomen auf wirtschaftliche und gut reproduzierbare Weise zugänglich zu machen.

Es wurden neue Polymere mit endständigen Halogenatomen gefunden, welche durch kationische Polymerisation von olefinisch ungesättigten Monomeren mittels eines Initiatorsystems aus einer halogenhaltigen Lewissäure und einem 3-bis 8-gliedrigen cyclischen Ether erhältlich sind.

Die erfindungsgemäß zu verwendenden cyclischen Ether können gesättigt oder ungesättigt sein, weitere Sauerstoffatome als Etherfunktion im Ring enthalten und an den C-Atomen inerte Substituenten wie Alkyl-, Cycloalkyl-, Arylalkyl-, Alkoxy-, Aryl- oder annellierte Reste aufweisen, wobei die Gesamtzahl der C-Atome bevorzugt maximal 50 beträgt.

Bevorzugt werden als Initiatoren 5-gliedrige cyclische Ether, das heißt Furanverbindungen, eingesetzt. Sehr geeignet sind dabei 2,5-Dihydrofuran-und Tetrahydrofuranderivate, insbesondere solche, welche in 2- und/oder 5-Stellung Methyl-, Ethyl-, oder Cyclohexylgruppen als Substituenten tragen.

Besonders geeignete Ether sind 2,2-Dimethyldihydrofuran, 2,5-Dimethyldihydrofuran, 2, 2, 5, 5-Tetramethyldihydrofuran, 2,2-Ethylmethyldihydrofuran, 2,5-Diethyldihydrofuran, 2, 2, 5, 5-Tetraethyldihydrofuran, 2,3-Dihydrobenzofuran, Dispiro[cyclohexan-1',2,1",5-dihydrofuran], 2,2-Dimethyltetrahydrofuran, 2,2-Diethyl-5,5-dimethyltetrahydrofuran, 2,2,5,5-Tetraethyltetrahydrofuran. Diese cyclischen Ether sind bekannt, oder auf bekannte Weise erhältlich.

Als Coinitiatoren werden halogenhaltige Lewissäuren wie $BX_3$, $AlX_3$, $SnX_4$, $TiX_4$, $SbX_6$ oder $FeX_3$ verwendet, wobei X Fluor, Chlor, Brom oder Jod bedeuten kann. Von besonderer Bedeutung sind dabei die Chloride, von denen Bortrichlorid vorzugsweise eingesetzt wird.

Als Monomere oder Comonomere kommen die bekannten kationisch polymerisierbaren, olefinisch ungesättigten Verbindungen mit 4 bis 14 C-Atomen in Betracht, als olefinische Kohlenwasserstoffe insbesondere 1-Buten, 2-Methyl-1-buten, 4-Methyl-1-penten, Vinylcyclohexan oder Styrol, weiterhin Vinylether. Bevorzugt ist Isobuten.

Zur Durchführung der Polymerisation wird der cyclische Ether vorzugweise in einem inerten Lösungsmittel in Konzentrationen von $10^{-6}$ bis $10^{-1}$ mol pro Mol des eingesetzten Monomeren verwendet. Der Coinitiator wird im 1-bis 200-fachen molaren Überschuß, bezogen auf den cyclischen Ether, hinzugefügt. Die Polymerisation wird üblicherweise bei Temperaturen zwischen -130°C und +30°C durchgeführt, vorzugsweise bei Temperaturen unterhalb von 0°C.

Die erfindungsgemäßen Polymere zeichnen sich dadurch aus, daß sie durchschnittlich fast die theoretische Anzahl von zwei Halogenatomen als Endgruppen enthalten, ein Wert, der mit den bisherigen Polymerisationsmethoden nicht erreicht werden konnte. Die erhaltenen Makromoleküle weisen außerdem eine sehr enge Molmassenverteilung auf, verglichen mit den bisher bekannten und von Halogenatomen terminierten Telechelen. Ein besonderer Vorteil der erfindungsgemäßen Polymerisate besteht darin, daß ihre Synthese bei für kationische Polymerisationen relativ hohen Temperaturen ausgeführt werden kann. Die Polymerisation kann nach den hierfür üblichen Techniken sowohl kontinuierlich als auch diskontinuierlich vorgenommen werden. Die erfindungsgemäßen Polymere eignen sich ferner zur Herstellung von weitgehend einheitlichen Blockcopolymeren. Die bevorzugt verwendeten Initiatoren werden praktisch quantitativ in die entstehenden Makromoleküle eingebaut.

Beispiele 1 bis 8:

Die Polymerisationen wurden unter Stickstoffatmosphäre in einem Rührreaktor in der Weise durchgeführt, daß man den Initiator und den Coinitiator bei -30°C 15 Sekunden lang in Methylchlorid mischte und anschließend das Monomere hinzufügte. Nach einer Reaktionszeit von 30 bis 180 Minuten wurde die Polymerisation durch Zugabe von Methanol abgebrochen. Nach Abdampfen des Lösungsmittels wurde das Polymere in Pentan aufgelöst, mehrmals mit Wasser gewaschen und unter vermindertem Druck bei 50°C getrocknet.

Zur Charakterisierung der Telechele wurden GPC- und $^1$H-NMR-Messungen sowie elementaranalytische Untersuchungsmethoden durchgeführt.

Die Bestimmung der Molmassen, insbesondere des Gewichtsmittels Mw und des Zahlenmittels Mn erfolgte mittels GPC. Für die chromatographischen Messungen wurde eine Säulenkombination aus $\mu$-Ultrastyragel $10^2$, $10^3$ und $2 \cdot 10^4$ benutzt. Tetrahydrofuran diente dabei als mobile Phase. Zur Eichung der Elutionskurven verwendete man Polyisobuten-Standards.

Ein Maß für die Einheitlichkeit von Polymeren, also für eine möglichst geringe Streuung der Molmasse ist der Quotient Mw/Mn. Je mehr dieser von 1 abweicht, desto uneinheitlicher ist das Polymere. Die in den Beispielen erhältlichen Werte von 1,1 bis 1,6 entsprechen einer hohen Einheitlichkeit.

Aus dem elementaranalytisch ermittelten Chlorgehalt konnte unter der Annahme, daß alle Makromoleküle zwei Chloratome als Endgruppen tragen, auf die entsprechende Molmasse Mn (EA-Cl) zurückgerechnet werden, welche mit dem durch GPC-Messungen erhältlichen Zahlenmittel Mn (GPC) gut übereinstimmte.

Ein weiteres Zahlenmittel Mn ($^1$H-NMR) wurde aus den Ergebnissen der $^1$H-NMR-Spektroskopie errechnet. Dabei verglich man die Intensitäten der Resonanzsignale von nichtterminalen Methyl- und Methylengruppen mit denen der endständigen Gruppen, welche wegen der benachbarten Chloratome hochfeldverschoben sind.

Die Funktionalität Fn der Polymeren wurde nach den Formeln

$$Fn = \frac{Mn(GPC)}{Mn(EA-Cl)} \cdot 2 \quad \text{und} \quad Fn = \frac{Mn(GPC)}{Mn(^1H-NMR)} \cdot 2$$

ermittelt. Auf Grund der guten Übereinstimmung zwischen den durch Endgruppenmethoden erhältlichen Zahlenmitteln Mn (EA-Cl) und Mn ($^1$H-NMR), mit den aus GPC-Messungen zugänglichen Werten Mn (GPC) lag Fn bei allen Beispielen nahe bei zwei.

Die genauen analytischen Ergebnisse sind zusammen mit den experimentellen Parametern der folgenden Tabelle zu entnehmen.

3

Tabelle

| Polymerisation von Isobuten (III) mit 2,2,5,5-Tetramethyldihydrofuran (I) und Bortrichlorid (II) in Methylchlorid | | | | | | | | | |
|---|---|---|---|---|---|---|---|---|---|
| Beispiel | Konzentrationen in mol/l | | | Ausbeute[+] in Gew.% | Mn (GPC) | Mn (EA-Cl) | Mn ($^1$H-NMR) | Mw/Mn (GPC) | Fn (EA-Cl) | Fn ($^1$H-NMR) |
| | I | II | III | | | | | | | |
| 1* | 0,0257 | 0,23 | 0,88 | 74 | 1480 | 1540 | 1560 | 1,36 | 1,9 | 1,9 |
| 2* | 0,0239 | 0,214 | 1,62 | 56 | 1810 | 2030 | 1940 | 1,60 | 1,8 | 1,9 |
| 3* | 0,0529 | 0,230 | 0,93 | 98 | 1130 | 1290 | 1200 | 1,12 | 1,8 | 1,9 |
| 4* | 0,0529 | 0,430 | 1,62 | 74 | 1360 | 1510 | 1460 | 1,29 | 1,8 | 1,9 |
| 5* | 0,0239 | 0,430 | 1,62 | 73 | 2580 | | 2780 | 1,22 | | 1,9 |
| 6** | 0,0239 | 0,230 | 1,62 | 81 | 2870 | 3220 | 3070 | 1,38 | 1,8 | 1,9 |
| 7** | 0,0296 | 0,230 | 1,62 | 82 | 2390 | 2620 | 2420 | 1,42 | 1,8 | 2,0 |
| 8** | 0,0064 | 0,230 | 0,88 | 66 | 5320 | 5200 | | 1,26 | 2,0 | |

\* Reaktionszeit 30 Minuten

\*\* Reaktionszeit 120 Minuten

\+ Ausbeute an Polymeren, bezogen auf die Monomermenge.

Aus den Beispielen 1 bis 8 wird ersichtlich, daß die Funktionalität der Telechele innerhalb der analytischen Schwankungen etwa zwei beträgt. Die Ausbeuten variieren mit dem Verhältnis von Initiator zu Coinitiator nur geringfügig und können durch Verlängerung der Reaktionszeiten noch gesteigert werden.

**Ansprüche**

1. Polymere mit endständigen Halogenatomen aus kationisch polymerisierbaren, olefinisch ungesättigten Monomeren, erhältlich durch Polymerisation mittels eines Initiatorsystems aus einer halogenhaltigen Lewissäure und einem 3-bis 8-gliedrigen cyclischen Ether.

2. Polymere nach Anspruch 1, erhältlich durch Verwendung eines 5-gliedrigen cyclischen Ethers als Initiatorkomponente.

3. Polymere nach Anspruch 1 oder 2, erhältlich durch Verwendung eines Halogenids des Bors, Zinns, Aluminiums, Titans, Antimons oder Eisens als halogenhaltige Lewissäure.

4. Polymere nach Anspruch 3, erhältlich durch Verwendung von Bortrichlorid als halogenhaltige Lewissäure.

5. Polymere nach den Ansprüchen 1 bis 4, erhältlich durch Polymerisation bei -130°C bis +30°C.

6. Polymere nach den Ansprüchen 1 bis 5, dadurch erhältlich, daß man den cyclischen Ether in Konzentrationen von $10^{-6}$ bis $10^{-1}$ mol pro Mol des eingesetzten Monomeren und die Lewissäure im molaren Verhältnis von 1:1 bis 200:1, bezogen auf den cyclischen Ether, einsetzt.

7. Polymere nach den Ansprüchen 1 bis 6, erhältlich durch Verwendung von Isobuten als kationisch polymerisierbares Monomeres.

8. Verfahren zur Herstellung der Polymeren gemäß den Ansprüchen 1 bis 7, mittels eines Initiatorsystems aus einer halogenhaltigen Lewissäure und einem Ether, dadurch gekennzeichnet, daß man hierzu als Ether einen 3-bis 8-gliedrigen cyclischen Ether verwendet.

Patentansprüche für folgenden Vertragsstaat: ES

1. Verfahren zur Herstellung von Polymeren mit endständigen Halogenatomen aus kationisch polymerisierbaren, olefinisch ungesättigten Monomeren mittels eines Initiatorsystems aus einer halogenhaltigen Lewissäure und einem Ether, dadurch gekennzeichnet, daß man hierzu als Ether einem 3- bis 8-gliedrigen cyclischen Ether verwendet.

2. Verfahren nach Anspruch 1, dadurch gekennzeichnet, daß man als Initiatorkomponente einen 5-gliedrigen cyclischen Ether verwendet.

3. Verfahren nach Anspruch 1 oder 2, dadurch gekennzeichnet, daß man als halogenhaltige Lewissäure ein Halogenid der Bors, Zinns, Aluminiums, Titans, Antimons oder Eisens verwendet.

4. Verfahren nach Anspruch 3, dadurch gekennzeichnet, daß man als halogenhaltige Lewissäure Bortrichlorid verwendet.

5. Verfahren nach Anspruch 1 bis 4, dadurch gekennzeichnet, daß man die Polymerisation bei Temperaturen von -130 °C bis +30 °C durchführt.

6. Verfahren nach den Ansprüchen 1 bis 5, dadurch gekennzeichnet, daß man den cyclischen Ether in Konzentrationen von $10^{-5}$ bis $10^{-1}$ mol pro Mol des eingesetzten Monomeren und die Lewissäure im molaren Verhältnis von 1:1 bis 200:1, bezogen auf den cyclischen Ether, einsetzt.

7. Verfahren nach den Ansprüchen 1 bis 6, dadurch gekennzeichnet, daß man Isobuten als kationisch polymerisierbares Monomeres verwendet.